# EUROPÄISCHE PATENTANMELDUNG

(11) **EP 4 549 755 A1**
(43) Veröffentlichungstag der Anmeldung: **07.05.2025**
(21) Anmeldenummer: 24199608.1
(22) Anmeldetag: 10.09.2024
(51) Int. Cl.: F16B 5/06, F16B 21/09

(54) **VORRICHTUNG ZUM LÖSBAREN VERBINDEN EINES ERSTEN BLECHTEILS MIT EINEM ZWEITEN BLECHTEIL**

(30) Priorität: 02.11.2023 DE 102023130319
(71) Anmelder: Stiebel Eltron GmbH & Co. KG, 37603 Holzminden (DE)
(72) Erfinder: Fitz, Jannik, 37603 Holzminden (DE); Kirchhoff, Hartmut, 37671 Höxter (DE)

(57) **Zusammenfassung**

Die Erfindung betrifft eine Vorrichtung zum lösbaren Verbinden eines ersten Blechteils (10) mit einem zweiten Blechteil (21) über Verbindungsflächen (12, 22) der Blechteile (10,21), wobei an der Verbindungsfläche (12) des ersten Blechteils (10) ein von dieser Fläche vorspringender Riegel (11) vorgesehen ist, der dazu ausgelegt ist, eine Ausnehmung in der Verbindungsfläche (22) des zweiten Blechteils (21) zu durchsetzen und in Folge einer Relativverschiebung der beiden Blechteile (10, 21) längs der Mittenachse des Ausnehmung unter gegenseitiger Verspannung der beiden Blechteile (10,21) und unter Kraftschluss deren Verbindungsflächen (12, 22) in einer Verrieglungsposition zu hintergreifen, wobei durch eine entgegensetzte Relativverschiebung der beiden Blechteile (10, 21) zu deren Trennung voneinander der Riegel (11) eine Entriegelungsposition einnimmt.

## Beschreibung

Die Erfindung betrifft eine Vorrichtung zum lösbaren Verbinden eines ersten Blechteils mit einem zweiten Blechteil über Verbindungsflächen der Blechteile, vor allem auf dem Gebiet der Luftführungtechnik sowie eine Verbindung der Endlamelle einer Wärmepumpe mit ihrer Luftführung auf Grundlage dieser Vorrichtung.

Im Rahmen der Entwicklung einer neuen Wärmepumpengeneration wird auch die Luftführung überarbeitet. Bislang werden für die Luftführung EPS Formteile (EPS = expandiertes Polystyrol) oder Luftführungen aus Blech eingesetzt. EPS Formteile sind kostenintensiv, wenn verschiedene Verdampfer-Geometrien vorhanden sind, während die Blechlösung bislang eine Schraubverbindung zwischen Luftführung und Endlamelle der Wärmepumpe erfordert, die zu einem Problem bei der Montage und im Servicefall führt. Das Problem ist die Montagereihenfolge, welche sich im Servicefall von der Erstmontage in der Fertigung unterscheidet. Bei der Erstmontage wird der Verdampfer auf die Bodenplatte der Wärmepumpe geschraubt, bevor die Luftführung an die Endlamelle der Wärmepumpe geschraubt wird. Zum Tauschen des Verdampfers ist es deshalb erforderlich, zuerst die Luftführung zu demontieren, bevor der Verdampfer frei zugänglich ist. Um sich diesen Arbeitsaufwand zu ersparen, soll die Luftführung so mit dem Verdampfer verbunden sein, dass man beide Komponenten unabhängig voneinander montieren und demontieren kann.

Es ist ferner bekannt, die als Blechteil gebildete Luftführung mit ihrer Verbindungsfläche lediglich an der Endlamelle anliegen zu lassen und den dabei verbleibenden Spalt mit einer Dichtung abzudichten. Diese Lösung hat jedoch den Nachteil, dass die erforderliche Festigkeit der gesamten Luftführung zu wünschen übrig lässt.

Unabhängig vom Verbesserungsbedarf der Verbindung der jeweils aus Blech bestehenden Luftführung und der Endlamelle eines Wärmetauschers besteht allgemein auf dem Gebiet der Luftführung ein Bedarf an einer Vorrichtung zum Verbinden von zwei Blechteilen, die eine dauerhaft feste und dichte, jedoch ohne großen Aufwand wieder lösbare Verbindung der Blechteile kostengünstig gewährleistet.

Eine primäre Aufgabe der Erfindung besteht deshalb darin, eine Vorrichtung zum Verbinden von zwei Blechteilen zu schaffen, die eine dauerhaft feste und dichte, jedoch ohne großen Aufwand wieder lösbare Verbindung der Blechteile kostengünstig gewährleistet.

Eine weitere Aufgabe der vorliegenden Erfindung besteht darin, eine Vorrichtung zum dauerhaft festen und dichten Verbinden der aus Blech bestehenden Luftführung von Wärmepumpen mit der aus Blech bestehenden Endlamelle des Verdampfers zu schaffen, die eine Montage und Demontage dieser Teile ohne großen Aufwand kostengünstig gewährleistet.

Die primäre Aufgabe wird durch den Gegenstand des Anspruchs 1 gelöst. Die weitere Aufgabe wird durch die Merkmale des Anspruchs 10 gelöst. Die rückbezogenen Ansprüche betreffen zweckmäßige und erfinderische Weiterbildungen dieser Erfindung.

Erfindungsgemäß vorgeschlagen wird eine Vorrichtung zum lösbaren Verbinden eines ersten Blechteils mit einem zweiten Blechteil über Verbindungsflächen der Blechteile, wobei an der Verbindungsfläche des ersten Blechteils ein von dieser Fläche vorspringender Riegel vorgesehen ist, der dazu ausgelegt ist, eine Ausnehmung in der Verbindungsfläche des zweiten Blechteils zu durchsetzen und in Folge einer Relativverschiebung der beiden Blechteile längs der Mittenachse des Ausnehmung unter gegenseitiger Verspannung der beiden Blechteile und unter Kraftschluss deren Verbindungsflächen in einer Verrieglungsposition zu hintergreifen, wobei durch eine entgegengesetzte Relativverschiebung der beiden Blechteile zu deren Trennung voneinander der Riegel eine Entriegelungsposition einnimmt.

Demnach schafft die Erfindung einen Verriegelungsmechanismus zum lösbaren Verbinden von Blechteilen, der derart gestaltet ist, dass die Verriegelung und die Entriegelung des Mechanismus durch eine Relativverschiebung der miteinander zu verbindenden bzw. zu lösenden Blechteile erfolgt. Durch die Verriegelung gelangen die Verbindungsflächen der Blechteile in einen innigen, vollflächigen Kontakt. Da der Verriegelungsmechanismus auf die beiden Verbindungflächen im Verriegelungsmodus eine Spannung ausübt, werden diese Flächen und damit die Blechteile im Formschluss kraftschlüssig miteinander verbunden. Diese Verbindungsart zeichnet sich durch ein Maß an Dichtigkeit aus, die für einen Einsatz der Blechteile im Rahmen einer Luftführungsanwendung hinreichend ausgeprägt ist, um den Einsatz eines Dichtungsmittels überflüssig zu machen.

Eine vorteilhafte Ausführungsform der erfindungsgemäßen Vorrichtung sieht vor, dass der brückenförmig ausgebildete Riegel einen zentralen Hintergreifteil aufweist, der zusammen mit zwei sich daran anschließenden, schmäleren, rampenförmig abfallenden Stegen aus dem ersten Blechteil ausgestanzt bzw. freigeschnitten von diesem soweit übersteht, dass es die Rückseite des zweiten Blechteils kraftschlüssig hintergreift und in dieser Position unter gegenseitiger Verspannung der beiden Blechteile nach deren Relativverschiebung in Längsrichtung der auch als Schlitz zu bezeichnenden Ausnehmung im zweiten Blechteil verriegelt ist, die in einem Verriegelungsabschnitt schmaler und länger als der Hintergreifteil und an einem sich daran anschließenden Einführungsabschnitt breiter und länger als der gesamte Riegel ist, wobei das Hintergreifteil über schräg verlaufende Flanken in die schmaleren Stege übergeht.

Mithilfe dieses Verriegelungsmechanismus gestaltet sich die Montage/Demontage der beiden Blechteile wie folgt: Die Blechteile werden derart aneinandergelegt, dass der Riegel des ersten Blechteils zunächst das breitere und längere Ende der Ausnehmung des zweiten Blechteils durchsetzt bis die Verbindungsflächen der Blechteile bündig aneinander anlegen, woraufhin die Blechteile in Richtung der Längsmittenachse der Ausnehmung relativ zueinander verschoben werden, wodurch der in Verschiebungsrichtung vorliegende rampenförmig abfallende Steg des Riegels in den schmalen Abschnitt der Ausnehmung eintritt bis schließlich das zentrale Hintergreifteil auf die Rückseite des zweiten Blechteils aufläuft und bei fortgesetzter Relativverschiebung der Blechteile schließlich das zweite Blechteil hintergreift. Dieser Hintergriff verankert die beiden Blechteile unter Spannung aneinander, die aus der Tatsache herrührt, dass der Überstand des zentralen Hintergreifteils des Riegels vom ersten Blechteil geringer ist als die Stärke des zweiten Blechteils. Die Schräge der Stege erlaubt einen sukzessiven Aufbau der Spannkraft des Hintergreifteils des Riegels mit zunehmender Relativverschiebung der Blechteile. Die Demontage der Blechteile bzw. die Entriegelung des Verriegelungsmechanismus erfolgt mithilfe einer Relativverschiebung der Blechteile entgegen der zur Verriegelung führenden Relativverschiebung.

Die Verrieglungsposition des Verriegelungsmechanismus ist erreicht, sobald der komplette Riegel den schmaleren Teil der Ausnehmung, den Verriegelungsabschnitt vollständig durchsetzt, dessen in Richtung der vorausgehenden Relativverschiebung der beiden Blechteile vorne liegendes Ende eine Fortsetzung der Relativverschiebung unterbindet.

Eine Variante des erfindungsgemäßen Verriegelungsmechanismus kann so ausgebildet sein, dass beidseits des Verriegelungsabschnitts der Ausnehmung Einführungsabschnitte ausgebildet sind, die breiter und länger als der gesamte Riegel ausgebildet sind. Durch die beiden flächenmäßig vergrößerten Einführungsabschnitte kann der Riegel über beide Einführungsabschnitte bzw. Ausnehmungsenden in die Ausnehmung eingeführt und in seine Verrieglungsposition im in diesem Fall zentralen Verriegelungsabschnitt durch die Relativverschiebung der beiden Blechteile vorgeschoben werden, was den Vorteil einer universelleren Montagesituation hat.

Um die Verriegelungsposition des Riegels bei beidendig flächenmäßig erweiterter Ausnehmung zu stabilisieren, kann ein Anschlag vorgesehen sein, der eine Relativverschiebung der Blechteile über die Verriegelungsposition hinaus unterbindet. Dieser Anschlag kann an einem der Blechteile vorgesehen oder durch die Peripherie der Blechteile bereitgestellt sein, wie etwa durch einen Sockel, an dem die Blechteile angeordnet sind.

Vorteilhafterweise steigen die Flanken der schmaleren Stege des Riegels unter einem Winkel von 5 Grad bis 65 Grad, vor allem von etwa 45 Grad ausgehend vom ersten Blechteil zum zentralen Hintergreifteil an.

Um den kraftschlüssigen Hintergriff des Riegels in Art eines Linienkontakts zu optimieren, ist vorgesehen, dass sein Hintergreifteil V-Form oder eine Eindrückung mit einem mittigen Scheitel aufweist, der quer zu seiner Längserstreckung verläuft auf einem Niveau über der Verbindungsfläche des ersten Blechteils derart liegt, dass er das zweite Blechteil unter Spannung bzw. unter Kraftschluss hintergreift.

Der Innenwinkel der V-Form beträgt bevorzugt 5 Grad bis 65 Grad, vor allem etwa 22 Grad und der Abstand des Scheitels des V-förmigen Hintergreifteils von der Verbindungsfläche des ersten Blechteils entspricht bevorzugt etwa 1/5 der Stärke des zweiten Blechteils. Dieser Abstand variiert unter anderem aufgrund einer ggf. vorgesehenen Lackierung der Blechteile.

Um die Stabilität der Verbindung der beiden Blechteile zu erhöhen, können am ersten Blechteil mehrere Riegel und im zweiten Blechteil eine entsprechende Anzahl Ausnehmungen in voneinander beabstandeten Positionen vorgesehen sein.

Für den Fall der Verbindung der aus Blech bestehenden Endlamelle einer Wärmepumpe mit ihrer ebenfalls auf Blech bestehenden Luftführung ist vorgesehen, dass die Verbindung auf der erfindungsgemäßen Vorrichtung basiert, wobei die Endlamelle das eine der beiden Blechteile und die Luftführung das andere Blechteil umfasst. Im Vergleich zum Stand der Technik mit einer Schraubenverbindung von Luftführung und Endlamelle einer Wärmepumpe kann durch die erfindungsgemäße Verriegelungslösung bei der Montage Zeit und Material gespart werden. Dadurch erleichtert die erfindungsgemäße Verbindung nicht nur den Servicefall, vielmehr werden auch bei der Fertigung Kosten gespart.

Anhand des in den Zeichnungsfiguren dargestellten Ausführungsbeispiels ist die Erfindung mit weiteren Einzelheiten erläutert. Es zeigen:
- Fig. 1: eine dreidimensionale Ansicht eines ersten Blechteils, von dessen Verbindungsfläche eine Ausführungsform des erfindungsgemäßen Riegels vorsteht,
- Fig. 2: eine Draufsicht auf das erste Blechteil mit seinem Riegel gemäß Fig. 1,
- Fig. 3: eine Seitenansicht des ersten Blechteils mit seinem Riegel gemäß Fig. 1,
- Fig. 4: eine Draufsicht auf die Verbindungsfläche eines zweiten Blechteils, in dem eine Ausnehmung zur Aufnahme des Riegels nach Fig. 1 bis Fig. 3 ausgebildet ist,
- Fig. 5: eine dreidimensionale Ansicht der miteinander mittels des in die Ausnehmung eingreifenden Riegels verbundenen ersten und zweiten Blechteile, wobei der Riegel sich in Verrieglungsposition befindet, und
- Fig. 6: eine Draufsicht auf die Blechteileanordnung von Fig. 5.
Identische und baugleiche Teile sind mit identischen Bezugsziffern versehen. Die Figuren können teilweise vereinfachte oder schematische Darstellungen enthalten. Verschiedene Ansichten gleicher Teile können unterschiedlich skaliert sein.

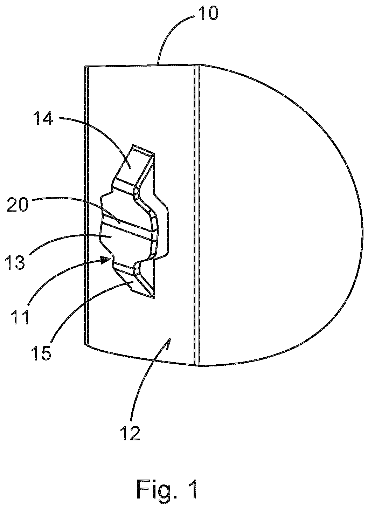

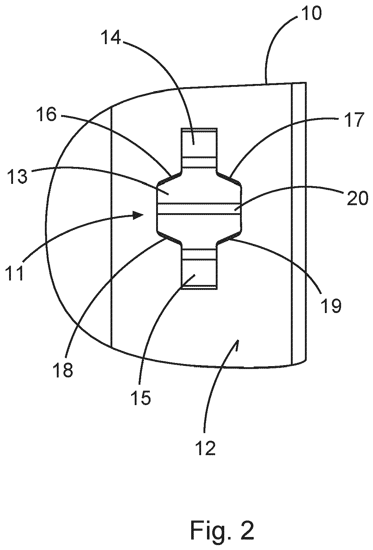

Fig. 1, Fig. 2 und Fig. 3 zeigen einen Abschnitt eines ersten Blechteils 10, aus dem ein Riegel 11 freigeschnitten ist, der von einer Seite des ersten Blechteils 10, die als Verbindungsfläche 12 mit einem später erläuterten zweiten Blechteil dient, vorsteht. Der Riegel 11 umfasst einen zentralen Hintergreifteil 13, der beidendig über schräg abwärts verlaufende Stege 14, 15 in das erste Blechteil 10 übergehen. Der derart brückenförmig ausgebildete Riegel hat den Vorteil, dass seine beiden Stege den zentralen Brückenteil stabil in seiner Position und Form halten. Der Hintergreifteil 13 ist breiter als die beiden Stege 14, 15, über welche er über schräg verlaufende Flanken 16 - 19 übergeht. Die beiden schmaleren Stege 14, 15 steigen unter einem Winkel von 5 Grad bis 65 Grad, vor allem von etwa 45 Grad ausgehend vom ersten Blechteil 10 zum zentralen Hintergreifteil 13 an.

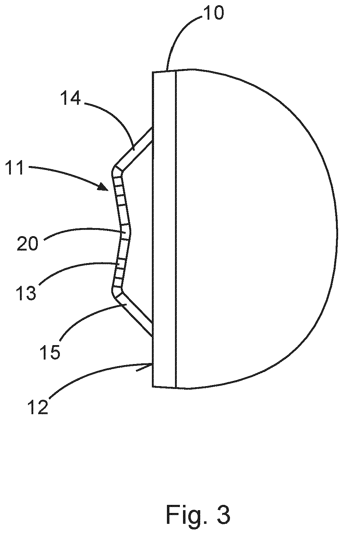

Wie aus der Seitenansicht von Fig. 3 hervorgeht, weist der Hintergreifteil 13 des Riegels 11 V-Form oder eine Eindrückung mit einem mittigen Scheitel 20 auf, der quer zur Längserstreckung des Hintergreifteils 13 verläuft und auf einem Niveau bzw. mit einem Abstand über der Verbindungsfläche 12 des ersten Blechteils 11 derart liegt, dass er das zweite Blechteil unter Spannung hintergreift. Der Scheitel 20 verleiht dem Hintergreifteil 13 Elastizität und sorgt für Toleranzausgleich. Für andere Anwendungsbereiche mit höheren Kräften kann der im Wesentlichen einen Linienkontakt bereitstellende Scheitel 20 entsprechend breiter als Kleinflächenkontakt ausgebildet werden.

Der Innenwinkel der V-Form des Hintergreifteils 13 beträgt 5 Grad bis 65 Grad, vor allem etwa 22 Grad und der Abstand des Scheitels 20 des V-förmigen Hintergreifteils 13 von der Verbindungsfläche 12 des ersten Blechteils 10 entspricht etwa 1/5 der Stärke des nachfolgende erläuterten zweiten Blechteils.

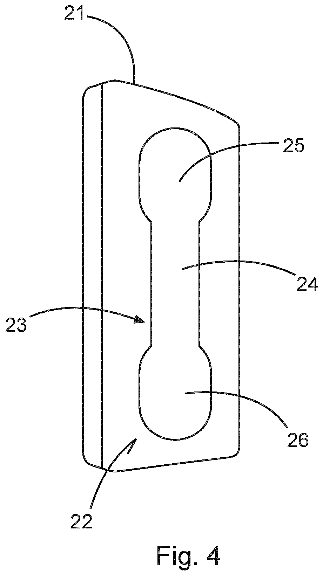

Fig. 4 zeigt einen Abschnitt eines zweiten Blechteils 21, das dazu bestimmt ist, über eine Verbindungsfläche 22 mit dem ersten Blechteil 10 verbunden zu werden. Im zweiten Blechteil ist eine schlitzförmige Ausnehmung 23 ausgebildet, die einen schmalen zentralen Verriegelungsabschnitt 24 aufweist, an den sich beidendig gleichermaßen breite Einführungsabschnitte 25, 26 anschließen, deren Breite und Länge derart bemessen sind, dass der komplette Riegel 11 durch sie hindurchzutreten vermag, während der Verriegelungsabschnitt 24 zwar mindestens so lang ausgebildet ist wie der gesamte Riegel 11 lang ist, jedoch schmaler als der Riegel im Hintergreifteil 13 breit ist. Der Verriegelungsabschnitt 24 umfasst zueinander parallele, geradlinige Längsränder, während die Einführungsabschnitte 22, 23 in etwa eine ovale Kontur aufweisen.

Die Ausnehmung 23 im zweiten Blechteil 21 legt zusammen mit dem Riegel 11 des ersten Blechteils 10 einen Verriegelungsmechanismus fest, durch den die beiden Blechteile 10, 21 lösbar miteinander dicht verbunden werden können. Die Funktion des Verriegelungsmechanismus ist nachfolgend erläutert.

Die beiden Blechteile 10 und 21 werden zunächst derart aufeinander gelegt, dass der Riegel 13 am ersten Blechteil 10 zunächst in eines der beiden breiteren und längeren Enden bzw. Einführabschnitte 25 bzw. 26 der Ausnehmung 13 des zweiten Blechteils 21 durchsetzt bis die Verbindungsflächen 12, 22 der beiden Blechteile 10 und 21 bündig aneinander anliegen, woraufhin die Blechteile 10 und 21 in Richtung der Längsmittenachse der Ausnehmung 13 relativ zueinander verschoben werden, wodurch der in Verschiebungsrichtung vorliegende rampenförmige Steg 14 bzw. 15 des Riegels 13 in den schmalen Ausnehmungsabschnitt, den Verriegelungsabschnitt 24 der Ausnehmung 23 eintritt und sich entlang diesem vorwärts bewegt, wobei dabei das zentrale Hintergreifteil 13 des Riegels 11 auf die Rückseite des zweiten Blechteils 21 aufläuft und bei fortgesetzter Relativverschiebung der Blechteile 10 und 21 schließlich das zweite Blechteil 21 mit dem Scheitel 20 des V-förmigen Hintergreifteils 13 kraftschlüssig hintergreift, wobei der Kraftschluss von der Federwirkung des durch den Hintergriff federnd eingedrückten Riegels herrührt. Mit anderen Worten verankert der Hintergriff die beiden Blechteile 10 und 21 unter Spannung aneinander, die aus der Tatsache herrührt, dass der Überstand des zentralen Hintergreifteils 13 des Riegels 11 vom ersten Blechteil 10 geringer ist als die Stärke des zweiten Blechteils 21. Die Schräge des Stegs 14 bzw. 15 des Riegels 11 erlaubt einen sukzessiven Aufbau der Spannkraft des Hintergreifteils 13 des Riegels 11 mit zunehmender Relativverschiebung der Blechteile 10 und 21. Die Demontage der Blechteile 10 und 21 bzw. die Entriegelung des Verriegelungsmechanismus erfolgt mithilfe einer Relativverschiebung der Blechteile 10, 21 entgegen der zur Verriegelung führenden Relativverschiebung.

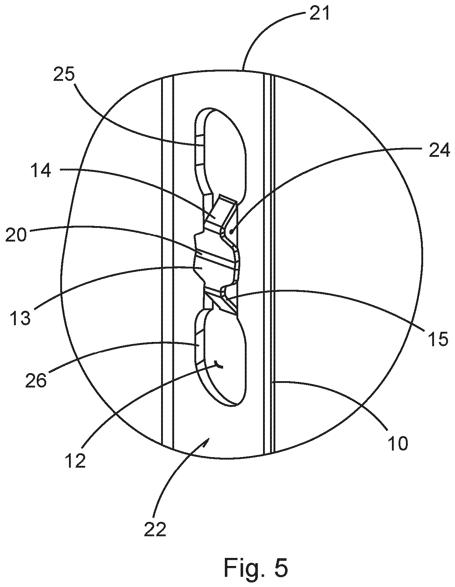

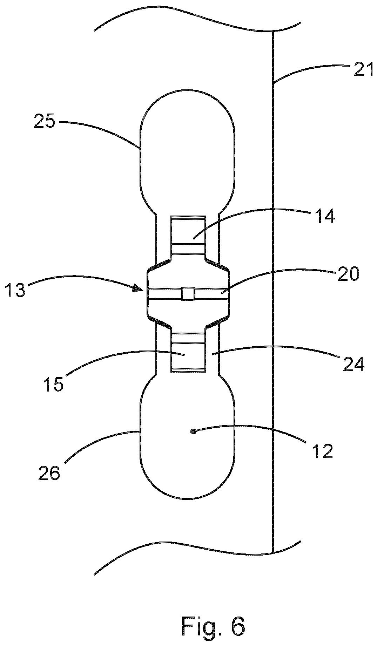

Die aus Fig. 5 und Fig. 6 ersichtliche finale Verriegelungsposition des Verriegelungsmechanismus ist erreicht, sobald der komplette Riegel 11 den schmaleren Verriegelungsabschnitt 24 der Ausnehmung 23 vollständig durchsetzt, dessen in Richtung der vorausgehenden Relativverschiebung der beiden Blechteile 10 und 21 vorne liegendes Ende eine Fortsetzung der Relativverschiebung unterbindet.

Alternativ zu den beiden Einführungsabschnitten 25, 26 der Ausnehmung 23 kann lediglich ein einziger Einführungsabschnitt (nichtgezeigt) vorgesehen sein. Ein derart modifizierter Verriegelungsabschnitt erlaubt denselben Entriegelungs/Verriegelungsvorgang wie vorstehend anhand von zwei Einführungsabschnitten erläutert, mit dem Unterschied, dass für das Einsetzen des Riegels 13 eben nur ein einziger Einführungsabschnitt der Ausnehmung in Frage kommt. Als Vorteil bietet diese Ausführungsform ein durch Wegfall eines zweiten Einführungsabschnitts gebildetes Sackende des Verriegelungsabschnitts des Riegels, das in Art eines Anschlags die Einführstrecke des Riegels in die Ausnehmung begrenzt.

### Bezugszeichenliste

- 10: erstes Blechteil
- 11: Riegel
- 12: Verbindungsfläche des ersten Blechteils
- 13: Hintergreifteil
- 14: Steg
- 15: Steg
- 16-9: Flanken
- 20: Scheitel
- 21: zweites Blechteil
- 22: Verbindungsfläche des zweiten Blechteils
- 23: Ausnehmung
- 24: Verrieglungsabschnitt
- 25, 26: Einführungsabschnitte

## Patentansprüche

1. Vorrichtung zum lösbaren Verbinden eines ersten Blechteils (10) mit einem zweiten Blechteil (21) über Verbindungsflächen (12, 22) der Blechteile (10,21), wobei an der Verbindungsfläche (12) des ersten Blechteils (10) ein von dieser Fläche vorspringender Riegel (11) vorgesehen ist, der dazu ausgelegt ist, eine Ausnehmung in der Verbindungsfläche (22) des zweiten Blechteils (21) zu durchsetzen und in Folge einer Relativverschiebung der beiden Blechteile (10, 21) längs der Mittenachse des Ausnehmung unter gegenseitiger Verspannung der beiden Blechteile (10,21) und unter Kraftschluss deren Verbindungsflächen (12, 22) in einer Verrieglungsposition zu hintergreifen, wobei durch eine entgegensetzte Relativverschiebung der beiden Blechteile (10, 21) zu deren Trennung voneinander der Riegel (11) eine Entriegelungsposition einnimmt.

2. Vorrichtung nach Anspruch 1, wobei der brückenförmig ausgebildete Riegel (11) einen zentralen Hintergreifteil (13) aufweist, der zusammen mit zwei sich daran anschließenden, schmaleren, rampenförmig abfallenden Stegen (14, 15) aus dem ersten Blechteil (10) ausgestanzt bzw. freigeschnitten von diesem soweit übersteht, dass es die Rückseite des zweiten Blechteils (21) kraftschlüssig hintergreift und in dieser Position unter gegenseitiger Verspannung der beiden Blechteile (10,21) nach deren Relativverschiebung in Längsrichtung der Ausnehmung (23) im zweiten Blechteil (21) verriegelt ist, die in einem Verriegelungsabschnitt (24) schmaler und länger als der Hintergreifteil (13) und an einem sich daran anschließenden Einführungsabschnitt (25, 26) breiter und länger als der gesamte Riegel (11) ist, wobei das Hintergreifteil (13) über schräg verlaufende Flanken (16-19) in die schmaleren Stege (14, 15) übergeht.

3. Vorrichtung nach Anspruch 2, wobei beidseits des Verriegelungsabschnitts (24) der Ausnehmung (23) Einführungsabschnitte (25, 26) ausgebildet sind, die breiter und länger als der gesamte Riegel (11) ausgebildet sind.

4. Vorrichtung nach Anspruch 2 oder 3, wobei die schmaleren Stege (14, 15) unter einem Winkel von 5 Grad bis 65 Grad, vor allem von etwa 45 Grad ausgehend vom ersten Blechteil (10) zum zentralen Hintergreifteil (13) ansteigen.

5. Vorrichtung nach Anspruch 4, wobei der Hintergreifteil (13) des Riegels (11) V-Form oder eine Eindrückung mit einem mittigen Scheitel (20) aufweist, der quer zu seiner Längserstreckung verläuft auf einem Niveau über der Verbindungsfläche (12) des ersten Blechteils (10) derart liegt, dass er das zweite Blechteil (21) unter Spannung hintergreift.

6. Vorrichtung nach Anspruch 5, wobei der Innenwinkel der V-Form 5 Grad bis 65 Grad, vor allem etwa 22 Grad beträgt.

7. Vorrichtung nach Anspruch 5 oder 6, wobei der Abstand des Scheitels (20) des V-förmigen Hintergreifteils (13) von der Verbindungsfläche (12) des ersten Blechteils (10) etwa 1/5 der Stärke des zweiten Blechteils (21) entspricht.

8. Vorrichtung nach einem der Ansprüche 1 bis 7, wobei am ersten Blechteil (10) mehrere Riegel (11) und im zweiten Blechteil (21) eine entsprechende Anzahl Ausnehmungen (23) ausgebildet sind.

9. Lösbare Verbindung der Endlamelle einer Wärmepumpe mit ihrer Luftführung, **dadurch gekennzeichnet, dass** die Verbindung auf der Vorrichtung von einem der Ansprüche 1 bis 8 basiert, wobei die Endlamelle das eine der beiden Blechteile (21) und ein Blechteil der Luftführung (10) das andere Blechteil umfasst.

10. Wärmepumpe mit einer Luftführung und einer Endlamelle und einer Vorrichtung nach einem der Ansprüche 1 bis 8, wobei die Vorrichtung zum lösbaren Verbinden der Endlamelle als erstem Blechteil (10) und eines Blechs der Luftführung als zweitem Blechteil (21) ausgebildet ist.
